# EUROPEAN PATENT SPECIFICATION

(11) **EP 2 772 351 B1**
(45) Date of publication and mention of the grant of the patent: **02.10.2019**
(21) Application number: 14154244.9
(22) Date of filing: 07.02.2014
(51) Int. Cl.: B32B 5/00, B32B 5/02, B32B 5/04, B32B 5/06, B32B 5/10, B32B 5/12, B32B 5/26, B32B 5/28, B32B 7/00, B32B 7/02, B32B 9/00, B29C 70/00, B29C 70/20

(54) **COMPOSITE LAMINATED PLATE HAVING REDUCED CROSSPLY ANGLE**
LAMINIERTE VERBUNDPLATTE MIT REDUZIERTEM DIAGONALWINKEL
PLAQUE STRATIFIÉE COMPOSITE DISPOSANT D'UN ANGLE DIAGONAL RÉDUIT

(30) Priority: 28.02.2013 US 201313780382
(43) Date of publication of application: 03.09.2014
(73) Proprietor: The Boeing Company, Chicago, IL 60606-1596 (US)
(72) Inventor: Kismarton, Max U., Seattle, WA Washington 98124 (US)
(74) Representative: Shipp, Nicholas

(56) References cited:
- EP-A1- 2 671 707
- WO-A1-2009/133382
- WO-A1-2011/128667
- US-A1- 2003 186 038
- US-A1- 2006 222 837
- US-A1- 2010 233 424

## Description

### BACKGROUND

A composite wing of a commercial aircraft is designed for bending strength and stiffness under normal operating conditions (where bending loads are dominant). Wing skin made of a composite material such as carbon fiber reinforced plastic (CFRP) may include multiple plies of reinforcing fibers oriented at 0 degrees with respect to a dominant load direction for bending strength.

The wing skin may also include multiple plies of reinforcing fibers oriented at 90 degrees (with respect to the dominant load direction) for bending stiffness. These 90 degree fibers may also increase transverse strength and bearing strength.

The wing skin may also be designed for damage tolerance. Multiple plies of reinforcing fibers oriented at +45 and -45 degrees (with respect to the dominant load direction) may be added to suppress lengthwise skin splitting that would otherwise occur when the skin incurs a large penetrating damage and fibers are broken. These ±45 degree fibers may also increase shear strength, torsional strength, and bending stiffness.

Each ply of reinforcing fibers adds weight to the wing skin. As weight is added, fuel costs and other aircraft operating costs are increased.

Therein lies the challenge of reducing weight of the wing skin without compromising bending strength, bending stiffness, and damage tolerance.

EP 2671707 discloses a composite laminate having a primary axis of loading and comprising a plurality of resin plies each reinforced with unidirectional fibers. The laminate includes cross-plies with fiber orientations optimized to resist bending and torsional loads along the primary axis of loading.

US 2006/0222837 discloses composite laminate structures and methods of forming the same. In one embodiment, the structure includes a first bidirectional layer having a first portion that includes parallel reinforcement fibers oriented at a first angle relative to a first direction and a second portion that includes parallel reinforcement fibers oriented at a second angle relative to the first direction. The structure further includes a second bidirectional layer having a first portion that includes parallel reinforcement fibers oriented at a third angle relative to the first direction and a second portion that includes parallel reinforcement fibers oriented at a fourth angle relative to the first direction. At least one unidirectional layer having a plurality of parallel reinforcement fibers is coupled to at least one of the first bidirectional layer and the second bidirectional layer.

US20090104398 discloses a composite article having reinforcing fibres oriented to suppress or delay ply splitting.

### SUMMARY

According to an embodiment herein, a composite laminated plate comprises a first plurality of plies of reinforcing fibers for lengthwise strength in a dominant load direction, and a second plurality of reinforcing fibers oriented at different angles around average angles ±β with respect to the dominant load direction, where β is between 15 and 35 degrees.

According to an example herein, a structure having a dominant load direction comprises a laminated composite plate including a plurality of plies of α-fibers oriented at angles +α and -α with respect to an x-axis, and a plurality of plies of β-fibers oriented at angles +β and -β with respect to the x-axis. Angle β is between 15 and 35 degrees, and angle α is 0 degrees or between 2 and 12 degrees.

According to another example herein, a composite box beam comprises a stiffening substructure, a first laminated plate covering one side of the substructure, and a second laminated plate covering an opposite side of the substructure. Each plate includes a first plurality of reinforcing fibers oriented at an angle between 15 and 35 degrees with respect to a longitudinal axis of the substructure.

According to another embodiment herein, a method of forming a plate having an x-axis comprises forming a ply stack including a first plurality of reinforcing fibers oriented at an angle ±α with respect to the x-axis, and a second plurality of reinforcing fibers oriented at different angles around an average angle β with respect to the x-axis, where β is between 15 and 35 degrees, and α is 0 degrees or between 2 and 12 degrees.

These features and functions may be achieved independently in various embodiments or may be combined in other embodiments. Further details of the embodiments can be seen with reference to the following description and drawings.

### BRIEF DESCRIPTION OF THE DRAWINGS

FIG. 1A is an illustration of a ply of reinforcing fibers and a ply coordinate system.
FIG. 1B is an illustration of a composite laminated plate including plies of reinforcing fibers oriented at different angles with respect to an x-axis of the plate.
FIG. 2 is an illustration of the effect of different fiber angles on overall strength of a composite laminated plate.
FIG. 3 is an illustration of general results for large notch tension tests on a set of composite coupons, the tests conducted by the applicant.
FIG. 4 is an illustration of general results for filled hole tension tests on a set of composite coupons, the tests conducted by the applicant.
FIG. 5 is an illustration of a method of forming a composite laminated plate.
FIG. 6 is an illustration of a ply stack of reinforcing fibers.
FIG. 7 is an illustration of a box beam including composite laminated plates.
FIG. 8 is an illustration of different beams including composite laminated plates.

### DETAILED DESCRIPTION

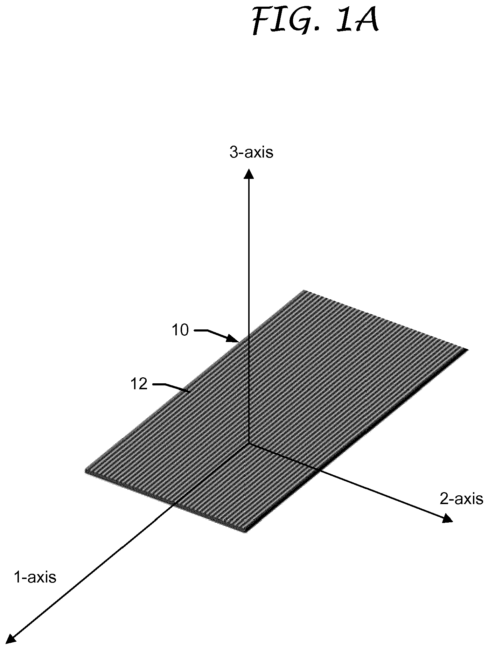

Reference is made to FIG.1A, which illustrates a ply 10 of reinforcing fibers 12, and a ply coordinate system. The ply coordinates system includes a 1-axis, 2-axes, and 3-axis. The fibers 12 are unidirectional, and extend along the 1-axis. The 2-axis lies in-plane with the 1-axis, but is normal to the 1-axis. The 3-axis lies out-of- plane with the 1- and 2-axes, but is normal to the 1-and 2-axes. The ply 10 has very strong direction along the 1-axis, and it has a very weak direction across the fibers (along the 2- and 3-axes).

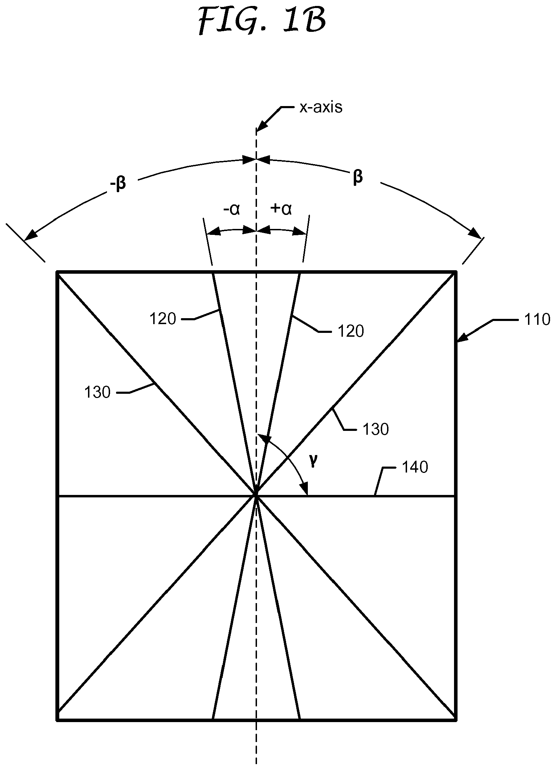

Reference is made to FIG.1B, which illustrates a composite laminated plate 110 including multiple plies of reinforcing fibers embedded in a matrix. The reinforcing fibers and matrix are not limited to any particular composition. Examples of material for the reinforcing fibers include, but are not limited to, carbon, fiberglass, Kevlar, boron, and titanium. Examples of material for the matrix include, but are not limited to, plastic and metal. As a first example, the plate 110 includes carbon fibers embedded in a plastic matrix. As a second example, the plate 110 includes carbon fibers embedded in a titanium matrix.

The plate 110 has an x direction-axis, which is represented by a dotted line. For instance, the x-axis may correspond to the dominant load direction of the plate 110, whereby tensile or compressive force is applied in the direction of the x-axis. The plate also has a y-axis, which lies in-plane with the x-axis, and a z-axis, which lies out-of- plane with the x- and y-axes (the y- and z-axes are not illustrated). The x-, y-, and z-axes are orthogonal.

A first plurality of the plies of reinforcing fibers 120 are oriented at angles +α and -α with respect to the x-axis. These fibers, hereinafter referred to as α-fibers 120, provide lengthwise strength in the direction of the x-axis. In some embodiments, α=0 degrees for maximum lengthwise strength.

A second plurality of reinforcing fibers 130 are oriented at angles +β and -β, with respect to the x-axis where β is between 15 and 35 degrees. These fibers are hereinafter referred to as β-fibers 130. In some embodiments, β is about 25 degrees.

If all of the β-fibers are oriented at the same angle, it is possible that ply splitting could occur in the direction of those β-fibers. To suppress ply splitting, the β-fibers may be oriented at slightly different angles, That is, the angle of the β-fibers is "blurred." Consider the example of β=25 degrees. Instead of using plies with β-fibers oriented at only +25 degrees, some of the plies have β-fibers oriented at +22 degrees, other plies have β-fibers oriented at +25 degrees, and others at +28 degrees such that the average angle of the β-fibers is +25 degrees. Similarly, the average angle of -25 degrees may be obtained by some plies of β-fibers oriented at -22 degrees, others at -25 degrees, and others at -28 degrees.

In some embodiments, a third plurality of plies of reinforcing fibers may be oriented at angles + γ and - γ with respect to the dominant load direction, where γ is between 87 and 92 degrees. These fibers, hereinafter referred to as γ -fibers 140, provide transverse strength and stiffness and also boost bearing strength. In some embodiments, γ =90 degrees.

In the plate 110 of FIG. 1B, β-fibers are used in place of conventional crossply 45 degree fibers. The applicant has found that the angle β between 15 and 35 degrees provides marginally less shear strength than 45 degree fibers, but significantly greater lengthwise strength than the 45 degree fibers. The applicant has further recognized that the number of plies of α-fibers may be reduced without compromising lengthwise strength and stiffness, and damage tolerance with respect to a dominant load direction. The resulting laminated α/β/γ plate is thinner and lighter than a conventional 0/45/90 plate having similar lengthwise strength and stiffness, and damage tolerance.

Suppression or delay of longitudinal ply splitting (along the x-axis) may be further enhanced by using α-fibers oriented at an angle α between 2 and 12 degrees instead of 0 degrees. In some embodiments, the range for angle α is between 3 and 5 degrees. The angle of the α-fibers may also be blurred (that is, the α-fibers may be oriented at slightly different angles to achieve an average angle α). For example, an average angle of 0 degrees may be obtained by some plies of α-fibers oriented at +5 degrees and some plies of α-fibers oriented at -5 degrees.

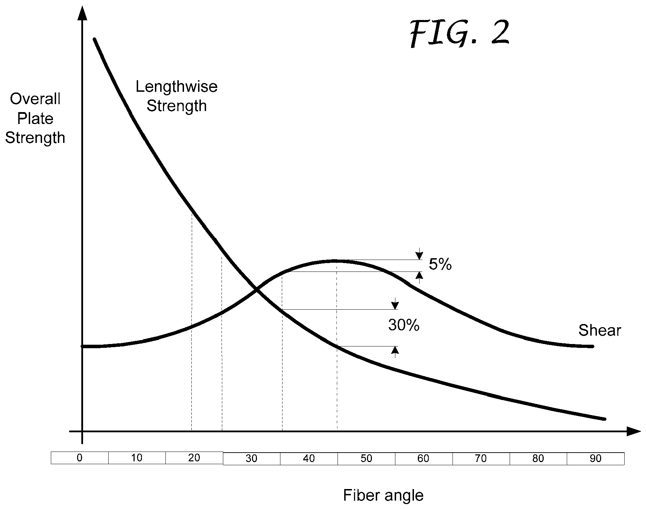

Reference is made to FIG. 2, which illustrates the effect of different fiber angles on overall strength of a laminated plate. Different values of fiber angles, from 0 degrees to 90 degrees, are indicated on the horizontal axis, and plate strength is indicated on the vertical axis. In general, lengthwise strength is reduced non-linearly as fiber angle is increased. Shear, on the other hand increases non-linearly as fiber angle is increased to 45 degrees, and then decreases non-linearly as fiber angle is further increased. When the fiber angle is decreased from a conventional 45 degrees to 35 degrees, there is a reduction in shear of only about 5 percent, but an increase in lengthwise strength of about 30 percent. As the fiber angle is further reduced towards 15 degrees, this tradeoff continues, whereby the percent reduction in shear is less than the percent reduction in lengthwise strength.

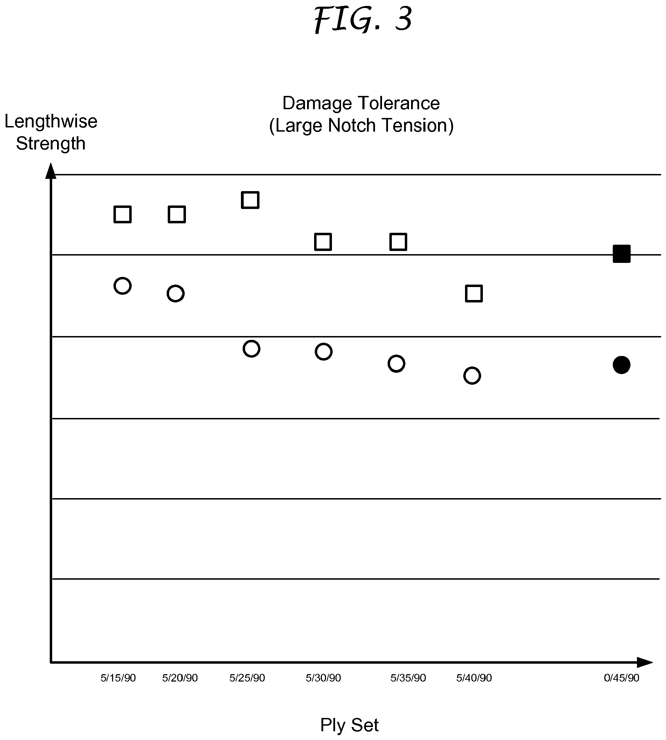

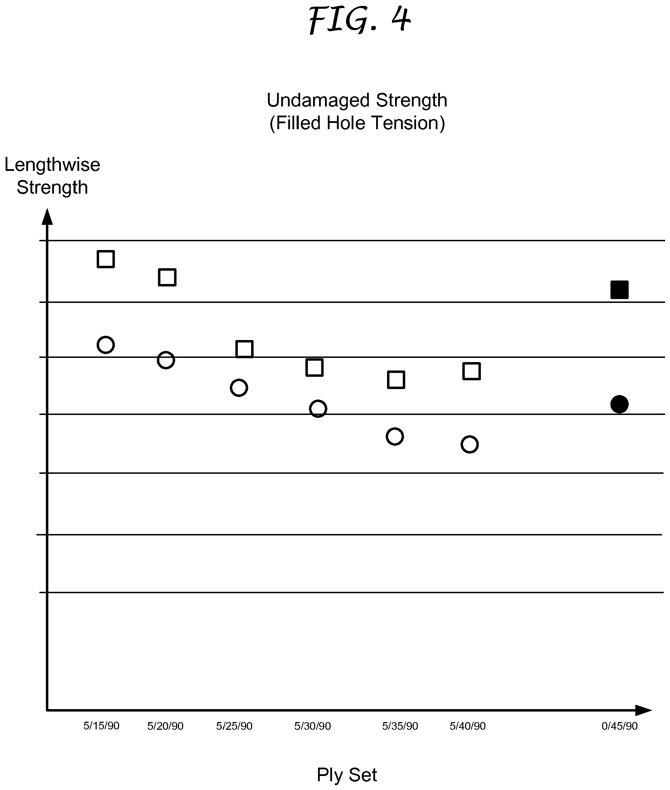

FIGS. 3 and 4 illustrate general results of tests conducted by the applicant. Each test was conducted on a set of composite coupons having α-fibers oriented at α=5 degrees, γ -fibers oriented at γ = 90 degrees, and β-fibers that varied between 15 and 45 degrees. In FIGS. 3 and 4, the horizontal axis indicates the different α/β/γ coupons as β is increased from 15 to 45 degrees, and the vertical axis indicates lengthwise strength.

FIG. 3 illustrates the general results of a large notch tension tests on a set of composite coupons. Large notch tension tests simulate a large penetrating damage that breaks reinforcing fibers. These tests provide information about lengthwise strength of a damaged coupon. The black square indicates the strength of a coupon having the conventional 0/45/90 fiber orientation. Relative fiber percentages are 50% of the 0 degree fibers, 40% of the ±45 degree -fibers, and 10% of the 90 degree fibers (that is, 50/40/10%). However, ply splitting occurred for this coupon.

To prevent ply splitting, the ratio of fibers for the 0/45/90 coupon was changed to 30/60/10%. Test results for the 0/45/90 coupon are indicated by the black circle. Although ply splitting was prevented, lengthwise strength was reduced.

Large notch tension tests were then conducted on different coupons having β-fibers between 15 and 40 degrees. Moreover, those coupons had a greater percentage of β-fibers than α-fibers (i.e., "soft" laminates). General results of those tests on the α/β/γ soft laminate coupons are indicated by open circles. Those results indicate that the coupons had greater lengthwise strength than the 0/45/90 soft laminate coupon, but not the 0/45/90 hard laminate coupon.

Large notch tension tests were conducted on several coupons having a greater percentage of α-fibers than β-fibers (i.e., "hard" laminates). General results of those tests on the α/β/γ hard laminate coupons are indicated by open boxes. Those results indicate that the coupons having β between 15 and 35 degrees had greater lengthwise strength than the 0/45/90 hard laminate coupon. For some reason, lengthwise strength of an α/β/γ hard laminate coupon was greatest at β=25 degrees.

These tests indicate that the number of plies of a 5/25/90 hard laminate may be reduced to provide the same lengthwise strength as a 0/45/90 hard laminate. However, because the 5/25/90 hard laminate has fewer plies that the 0/45/90 hard laminate, it is thinner and lighter. Moreover, the 5/25/90 hard laminate has greater damage tolerance with respect to ply splitting.

Reference is now made to FIG. 4, which illustrates general results of filled hole tension tests. A filled hole may be created in a coupon, for example, by drilling a hole drilled into the coupon and inserting a bolt through the drill hole. As the hole is drilled, reinforcing fibers are cut, but the coupon is not considered damaged. Thus, this test provides information about lengthwise strength of an undamaged coupon.

Hard laminates (represented by the open and black boxes) have greater lengthwise strength than soft laminates (represented by the open and black circles). Moreover, a hard laminate with having β-fibers oriented at β= 20 degrees has similar lengthwise strength as a conventional 0/45/90 hard laminate (represented by the black box).

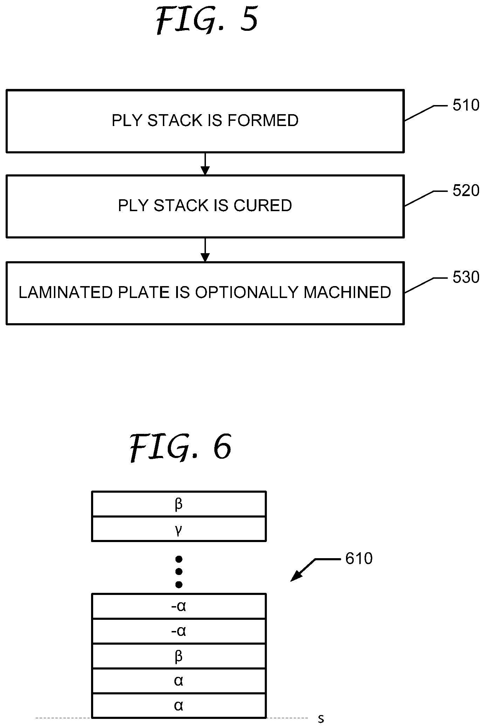

Reference is now made to FIG. 5, which illustrates a method of fabricating a laminated plate. At block 510, a ply stack is formed. The stack includes plies of α-fibers, plies of β-fibers, and plies of γ-fibers. The reinforcing fibers may be impregnated with resin before or after layup.

The plies of these reinforcing fibers may be deposited on a layup tool (e.g., a mandrel or mold tool). In some embodiments, each ply may be a unidirectional tape with fibers oriented in a single direction. In other embodiments, each ply may be a weave of fibers oriented in more than one direction. For instance, a weave may have some fibers oriented at +α and others oriented at -α. In still other embodiments, "cartridges" may be include pre-packaged plies having the correct fiber orientation (e.g., +α and -α) with respect to the x-axis.

The 1-axes of the plies may be aligned with the x-axis of the laminated plate. That is, the 1-axes may be aligned with a dominant load direction.

At block 520, the ply stack is cured to produce a composite laminated plate. At block 530, the laminated plate is optionally machined. For example, fastener holes or other types of openings may be drilled or cut into the laminated plate. The β-fibers suppress or delay lengthwise splitting at these holes. The ply splitting may be further suppressed or delayed by α-fibers oriented at an angle α between 2 and 12 degrees.

Reference is made to FIG. 6, which illustrates an example of a ply stack 610 having the following arrangement of plies: [β, γ,-β, α, α, β, -α, -α,-β, α, α, β, --α, -α,-β, α, α,]s, where the term "s" represents symmetry. That is, plies above a mid-plane of the laminated plate may be a mirror image of those below the mid-plane.

The purpose of this example is simply to illustrate that each ply contains fibers with the same fiber orientation, and that different plies have different fiber orientations. In this particular example, the distribution of fibers is 60% α-fibers, 30% β-fibers, and 10% γ-fibers (that is 60/30/10%). Other examples may have other arrangements of plies, and other relative percentages of fibers.

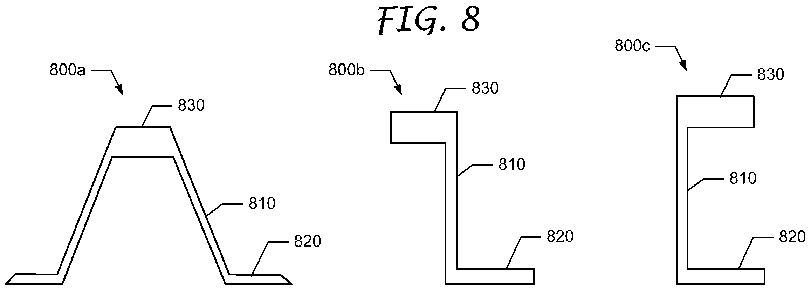

Reference is now made to FIG. 8. A laminated plate herein may be used in a structure having a dominant load direction. One example of such a structure is an elongated beam having a dominant load direction along its longitudinal axis. In some embodiments, the beam includes a web 810, at least one flange 820, and at least one composite cap 830. The web 810 and flange(s) 820 may be made of metal or composite material. At least one cap 830 includes α-fibers and β-fibers oriented with respect to the dominant load direction of the beam. A cap 830 may also include γ-fibers.

These embodiments are not limited to any particular geometry. Examples of beam geometries include, but are not limited to, hat frames, C-channels, Z-beams, J-beams, T-Beams and I-beams, and blade stiffened beams. In Figure 8, a hat frame 800a, Z-beam 800b and C-channel 800c are illustrated.

In other embodiments, the beam is a box beam including a box-shaped stiffening substructure and one or more composite laminated plates covering the frame. One or more of the plates include α-fibers and β-fibers oriented with respect to a dominant load direction of the box beam.

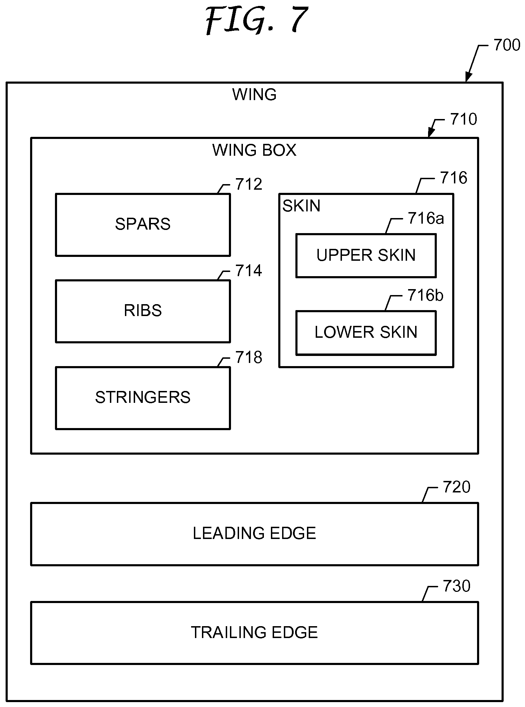

Reference is now made to FIG. 7, which illustrates an aircraft wing 700 including a wing box 710 (which is a type of box beam), a leading edge 720, and a trailing edge 730. The wing box 710 includes a stiffening substructure of spars 712 (e.g., a front spar and a rear spar) and ribs 714. The spars 712 extend in a spanwise direction, and the ribs 714 extend between the spars 712 in a chordwise direction. The wing box 710 may have a multi-spar or multi-rib configuration. The multi-rib configuration is preferred for commercial aircraft having long wing aspect ratios.

The wing box 710 further includes composite skin 716 covering the spars 712 and ribs 714. The skin 716 may include upper skin 716a and lower skin 716b.

During operation, the wing is subject to bending loads and torsional loads. For instance, wind gusts or other heavy loads may force the wing 700 to bend upward, thereby placing the upper skin 716a in lengthwise compression and the lower skin 716b in lengthwise tension. The bending loads are dominant. To handle the lengthwise loads, each skin 716a and 716b is composed of one or more composite laminated plates including α-fibers and β-fibers oriented with respect to the dominant load direction. The α-fibers provide bending strength, as they carry most of the lengthwise load.

The β-fibers suppress lengthwise skin splitting that would otherwise occur when the skin 716 incurs a large penetrating damage and fibers are broken. The β-fibers may also increase shear strength, torsional strength, and bending stiffness.

Since the β-fibers also carry some of the lengthwise load, the number of plies of α-fibers may be reduced without compromising bending strength, bending stiffness, and damage tolerance relative to a conventional 0/45/90 hard laminate. By reducing the number of plies of α-fibers, the gage and weight of the skin 716 is reduced. The use of such skin 716 instead of conventional 0/45/90 plates can result in a weight reduction of thousands of pounds. The weight reduction is highly desirable, as it reduces fuel costs and other aircraft operating costs.

In some embodiments, the skin 716 may be slightly unbalanced. In some embodiments, the skin may be slightly non- symmetric.

The stiffening substructure of the wing box 710 may further include stringers 718 that perform functions including, but not limited to, stiffening the skin 716. The stringers 718 may also extend in a spanwise direction.

The spars 712, ribs 714, and stringers 718 may be made of metal or balanced composite materials. The stringers 718 may be configured as beams having caps, flanges, and webs. The caps may be made of composite material plates including α-fibers, β-fibers, and γ-fibers oriented with respect to the longitudinal axis of their stringers 718.

For embodiments in which the stringers 718 may be made of composite material, the stringers 718 may be integrally formed with the skin 716. During ply stack formation, reinforcing fibers for the stringers 718 may be deposited on reinforcing fibers for the skin 716.

The spars 712 may include caps made of composite material having plies of α-fibers, β-fibers, and γ-fibers. The ribs 714 may include chords made of composite material having plies of α-fibers, β-fibers, and γ-fibers.

The disclosure further comprises constructions as set-out below:
A composite laminated plate is disclosed comprising a first plurality of plies of reinforcing fibers for lengthwise strength with respect to a dominant load direction, and a second plurality of reinforcing fibers oriented at different angles around average angles ±β with respect to the dominant load direction, where β is between 15 and 35 degrees.

β is about 25 degrees. The angles of the β-fibers may be blurred. The first plurality of plies of reinforcing fibers may be oriented at angles ±α with respect to the dominant load direction, where α is between 2 and 12 degrees. The angles of the α-fibers may be blurred.

The plate may further comprise a third plurality of plies of reinforcing fibers oriented at an angle γ with respect to the dominant load direction, where γ is between 87 and 92 degrees.

The plate may further comprise a matrix, wherein the fibers are embedded in the matrix.

The matrix may be a plastic matrix, and wherein the fibers may include carbon fibers embedded in the plastic matrix.

A greater percentage of fibers may be used in the first plurality than the second plurality.

Also disclosed is a structure having a dominant load direction, the structure comprising a laminated composite plate including a plurality of plies of α-fibers oriented at angles +α and -α with respect to an x-axis; and a plurality of plies of β-fibers oriented at angles +β and -β with respect to the x-axis, where β is between 15 and 35 degrees, and where α is 0 degrees or between 2 and 12 degrees.

The structure may further comprise a box beam stiffening substructure subject to bending that creates lengthwise forces along the x-axis; wherein the plate is attached to the stiffening substructure.

The structure may further comprise a beam including a web and flange; wherein the plate is attached to the flange as a cap.

Also disclosed is a box beam comprising a stiffening substructure; a first laminated plate covering one side of the substructure; and a second laminated plate covering an opposite side of the substructure, each plate including a first plurality of reinforcing fibers oriented at an angle between 15 and 35 degrees with respect to a longitudinal axis of the substructure.

Each plate may further include a second plurality of reinforcing fibers oriented at an angle between 2 and 12 degrees with respect to the longitudinal axis of the substructure.

A greater percentage of fibers may be used in the second plurality than the first plurality.

Also disclosed is a method of forming a plate having an x-axis, the method comprising forming a ply stack including a first plurality of reinforcing fibers oriented at an angle ±α with respect to the x-axis, and a second plurality of reinforcing fibers oriented at an angle ± β with respect to the x-axis, where β is between 15 and 35 degrees, and α is 0 degrees or between 2 and 12 degrees.

The method may further comprise laying up a third plurality of fibers at an angle of γ with respect to the x-axis, where γ is between 87 and 92 degrees.

The method may further comprise laying up integral stiffeners on the ply stack.

The method may further comprise embedding the fibers in a resin, and curing the ply stack.

The method may further comprise cutting fibers in the cured ply stack.

## Claims

1. A composite laminated plate (110) comprising a first plurality of plies (10) of reinforcing fibers (12) for lengthwise strength with respect to a dominant load direction, and a second plurality of reinforcing fibers (12) oriented at different angles around average angles ±β with respect to the dominant load direction, where β is between 15 and 35 degrees.

2. The plate (110) of claim 1, wherein β is 25 degrees.

3. The plate (110) of any preceding claim, wherein the first plurality of plies (10) of reinforcing fibers (12) are oriented at angles ±α with respect to the dominant load direction, where α is between 2 and 12 degrees.

4. The plate (110) of claim 3, wherein the α-fibers are oriented at different angles around an average angle α.

5. The plate (110) of any preceding claim, further comprising a third plurality of plies (10) of reinforcing fibers (12) oriented at an angle γ with respect to the dominant load direction, where γ is between 87 and 92 degrees.

6. The plate (110) of any preceding claim, further comprising a matrix, wherein the fibers (12) are embedded in the matrix.

7. The plate (110) of claim 6, wherein the matrix is a plastic matrix, and wherein the fibers (12) include carbon fibers (12) embedded in the plastic matrix.

8. The plate (110) of any preceding claim, wherein a greater percentage of fibers is used in the first plurality than the second plurality.

9. A method of forming a plate (110) having an x-axis, the method comprising forming a ply stack including a first plurality of reinforcing fibers (12) oriented at an angle ±α with respect to the x-axis, and a second plurality of reinforcing fibers (12) oriented at different angles around an average angle ± β with respect to the x-axis, where β is between 15 and 35 degrees, and α is 0 degrees or between 2 and 12 degrees.

10. The method of claim 7, further comprising laying up a third plurality of fibers (12) at an angle of γ with respect to the x-axis, where γ is between 87 and 92 degrees.

11. The method of any of claims 9-10, further comprising laying up integral stiffeners on the ply stack (610).

12. The method of any of claims 9-11, further comprising embedding the fibers (12) in a resin, and curing the ply stack (610).

13. The method of claim 12, further comprising cutting fibers (12) in the cured ply stack (610).

## Patentansprüche

1. Laminierte Verbundplatte (110), die eine erste Vielzahl von Lagen (10) von Verstärkungsfasern (12) zur Längsfestigkeit bezüglich einer dominanten Lastrichtung und eine zweite Vielzahl von Verstärkungsfasern (12) aufweist, die in unterschiedlichen Winkeln um Durchschnittswinkel ±β bezüglich der dominanten Lastrichtung ausgerichtet sind, wobei β zwischen 15 und 35 Grad liegt.

2. Platte (110) nach Anspruch 1, wobei β 25 Grad beträgt.

3. Platte (110) nach einem der vorhergehenden Ansprüche, wobei die erste Vielzahl von Lagen (10) von Verstärkungsfasern (12) in Winkeln ±α bezüglich der dominanten Lastrichtung ausgerichtet sind, wobei α zwischen 2 und 12 Grad liegt.

4. Platte (110) nach Anspruch 3, wobei die α-Fasern in unterschiedlichen Winkeln um einen Durchschnittswinkel α ausgerichtet sind.

5. Platte (110) nach einem der vorhergehenden Ansprüche, die des Weiteren eine dritte Vielzahl von Lagen (10) von Verstärkungsfasern (12) aufweist, die in einem Winkel γ bezüglich der dominanten Lastrichtung ausgerichtet sind, wobei γ zwischen 87 und 92 Grad liegt.

6. Platte (110) nach einem der vorhergehenden Ansprüche, die des Weiteren eine Matrix aufweist, wobei die Fasern (12) in die Matrix eingebettet sind.

7. Platte (110) nach Anspruch 6, wobei die Matrix eine Kunststoffmatrix ist, und wobei die Fasern (12) Karbonfasern (12) aufweisen, die in die Kunststoffmatrix eingebettet sind.

8. Platte (110) nach einem der vorhergehenden Ansprüche, wobei in der ersten Vielzahl ein größerer Prozentsatz von Fasern verwendet wird, als in der zweiten Vielzahl.

9. Verfahren zum Herstellen einer Platte (110), die eine x-Achse hat, wobei das Verfahren das Herstellen eines Lagenstapels aufweist, der eine erste Vielzahl von Verstärkungsfasern (12) aufweist, die in einem Winkel ±α bezüglich der x-Achse ausgerichtet sind, und eine zweite Vielzahl von Verstärkungsfasern (12), die in unterschiedlichen Winkeln um einen Durchschnittswinkel ±β bezüglich der x-Achse ausgerichtet sind, wobei β zwischen 15 und 35 Grad liegt und α 0 Grad ist oder zwischen 2 und 12 Grad liegt.

10. Verfahren nach Anspruch 7, das des Weiteren das Auflegen einer dritten Vielzahl von Fasern (12) in einem Winkel γ bezüglich der x-Achse aufweist, wobei γ zwischen 87 und 92 Grad liegt.

11. Verfahren nach einem der Ansprüche 9-10, das des Weiteren das Auflegen integraler Versteifungen auf den Lagenstapel (610) aufweist.

12. Verfahren nach einem der Ansprüche 9-11, das des Weiteren das Einbetten der Fasern (12) in ein Harz und das Aushärten des Lagenstapels (610) aufweist.

13. Verfahren nach Anspruch 12, das des Weiteren das Schneiden der Fasern (12) in dem ausgehärteten Lagenstapel (610) aufweist.

## Revendications

1. Plaque stratifiée composite (110) comprenant une première pluralité de couches (10) de fibres de renforcement (12) pour une résistance longitudinale par rapport à une direction de charge dominante, et une deuxième pluralité de fibres de renforcement (12) orientées selon des angles différents autour de angles moyens +β par rapport à la direction de charge dominante, où β est compris entre 15 et 35 degrés.

2. Plaque (110) selon la revendication 1, dans laquelle β est de 25 degrés.

3. Plaque (110) selon l'une quelconque des revendications précédentes, dans laquelle la première pluralité de couches (10) de fibres de renforcement (12) sont orientées selon des angles ±α par rapport à la direction de charge dominante, où α est compris entre 2 et 12 degrés.

4. Plaque (110) selon la revendication 3, dans laquelle les fibres α sont orientées selon des angles différents autour d'un angle moyen α.

5. Plaque (110) selon l'une quelconque des revendications précédentes, comprenant en outre une troisième pluralité de couches (10) de fibres de renforcement (12) orientées selon un angle γ par rapport à la direction de charge dominante, où γ est compris entre 87 et 92 degrés.

6. Plaque (110) selon l'une quelconque des revendications précédentes, comprenant en outre une matrice, dans laquelle les fibres (12) sont enrobées dans la matrice.

7. Plaque (110) selon la revendication 6, dans laquelle la matrice est une matrice de plastique et dans laquelle les fibres (12) incluent des fibres de carbone (12) enrobées dans la matrice de plastique.

8. Plaque (110) selon l'une quelconque des revendications précédentes, dans laquelle un pourcentage plus élevé de fibres est utilisé dans la première pluralité que dans la deuxième pluralité.

9. Procédé de formation d'une plaque (110) ayant un axe des x, le procédé consistant à former un empilement de couches incluant une première pluralité de fibres de renforcement (12) orientées selon un angle ±α par rapport à l'axe des x, et une deuxième pluralité de fibres de renforcement (12) orientées selon des angles différents autour d'un angle moyen +β par rapport à l'axe des x, où β est compris entre 15 et 35 degrés et α est égal à 0 degré ou est compris entre 2 et 12 degrés.

10. Procédé selon la revendication 7, comprenant en outre la pose d'une troisième pluralité de fibres (12) selon un angle de y par rapport à l'axe des x, où y est compris entre 87 et 92 degrés.

11. Procédé selon l'une quelconque des revendications 9 à 10, comprenant en outre la superposition de raidisseurs intégrés sur l'empilement de couches (610).

12. Procédé selon l'une quelconque des revendications 9 à 11, comprenant en outre l'incorporation des fibres (12) dans une résine, et le durcissement de l'empilement de couches (610).

13. Procédé selon la revendication 12, comprenant en outre la découpe de fibres (12) dans l'empilement de couches durci (610).
